# EUROPÄISCHE PATENTSCHRIFT

(11) **EP 3 438 496 B1**
(45) Veröffentlichungstag und Bekanntmachung des Hinweises auf die Patenterteilung: **06.11.2019**
(21) Anmeldenummer: 18194465.3
(22) Anmeldetag: 26.09.2008
(51) Int. Cl.: F16F 1/37

(54) **STÜTZKÖRPER ZUM SCHWINGUNGSDÄMPFENDEN ABSTÜTZEN VON LASTEN, INSBESONDERE ZUM ABSTÜTZEN EINES KOORDINATENMESSGERÄTS**
SUPPORTING BODY FOR THE VIBRATION-DAMPING SUPPORTING OF LOADS, IN PARTICULAR FOR SUPPORTING A COORDINATE MEASURING MACHINE
ELEMENT SUPPORT POUR LE SUPPORT DE CHARGES AVEC AMORTISSEMENT DE VIBRATIONS, NOTAMMENT POUR LE SUPPORT D'UN APPAREIL DE MESURE DE COORDONNEES

(30) Priorität: 26.10.2007 DE 102007052002
(43) Veröffentlichungstag der Anmeldung: 06.02.2019
(62) Teilanmeldung aus: 08802759.4
(73) Patentinhaber: Carl Zeiss Industrielle Messtechnik GmbH, 73447 Oberkochen (DE)
(72) Erfinder: Jacobs, Klaus, 89551 Königsbronn/Ochsenberg (DE); Leitenberger, Werner, 89520 Heidenheim (DE)
(74) Vertreter: Patentanwälte Bressel und Partner mbB

(56) Entgegenhaltungen:
- DE-U1- 29 716 765
- GB-A- 1 505 232

## Beschreibung

Die Erfindung betrifft einen Stützkörper zum schwingungsdämpfenden Abstützen von Lasten. Bei der Last handelt es sich insbesondere um ein Koordinatenmessgerät. Es kann sich bei der Last jedoch auch um andere Gegenstände handeln, z.B. Gegenstände, auf die wiederum das Koordinatenmessgerät gestellt wird. Weitere Beispiele für Geräte sind optische oder mit elektromagnetischer Strahlung arbeitende Mikroskope.

Es ist bekannt, ein schwingungsempfindliches Gerät gegen den Einfluss von Stoßanregungen zu sichern, indem eine schwere, d.h. eine hohe Masse aufweisende Grundplatte verwendet wird. In der Koordinatenmesstechnik werden daher vielfach Granitplatten eingesetzt. Wenn in der Nähe der Anordnung jedoch eine starke Stoßanregung stattfindet, z. B. ein Gegenstand zu Boden fällt, kann die Grundplatte trotzdem in Schwingungen versetzt werden und die Messung gestört werden.

Es ist daher bereits vorgeschlagen worden, Kunststoffmatten oder Gummipuffer zwischen dem Boden und der Grundplatte anzuordnen. Auch ist es möglich, aktive Schwingungs-Dämpfungssysteme einzusetzen, die z.B. versuchen, angeregte Schwingungen durch eine Gegenschwingung mit versetzter Phase zu kompensieren.

Die aktiven Dämpfungssysteme sind mit hohem Aufwand und Kosten verbunden. Passive Dämpfungselemente, wie z.B. Gummipuffer, sind zwar in der Regel kostengünstiger als aktive Dämpfungssysteme. Bei entsprechender Größe sind sie jedoch ebenfalls aufwendig in der Handhabung und nicht mehr kostengünstig herzustellen. Auch sind Gummimaterialen teilweise empfindlich gegen Chemikalien (wie z.B. Öle und Fette) oder sogar gegen Feuchtigkeit. Ein weiterer Nachteil von Gummimaterialien besteht darin, dass sie einem Alterungsprozess ausgesetzt sind, der ihre elastischen Eigenschaften verändert. Synthetische Kunststoffmaterialien, die z. B. Styrolacrylat oder Vinylacetat enthalten, erfordern chemische Prozesse, bei denen in erheblichem Maße Auflagen zum Schutz der Umwelt einzuhalten sind.

US 2001/012554 A1 offenbart ein Absorptionselement zur Absorption von Energie, das verstärkende Elemente enthält, welche zumindest teilweise in Richtung einer Kompression angeordnet sind. Die verstärkenden Elemente sind von Schaumstoff-Partikeln umgeben, die miteinander verklebt oder verschweißt sind. Durch Anwendung von heißem Dampf können die Partikel bei der Herstellung expandieren und so den Druck für eine Verbindung erzeugen. Das Absorptionselement dient der Aufnahme von kinetischer Energie bei Stößen, insbesondere in der Struktur von Motorfahrzeugen.

US 6,113,084 beschreibt einen Federpuffer, umfassend eine Befestigungsplatte, aus der mindestens eine Herauskragung herauskragt, einen Puffer, der um die Befestigungsplatte herum geformt ist, wobei die Herauskragungen aus dem Puffer herauskragen, und eine Befestigungsschale zur Aufnahme mindestens des unteren Teils des Puffers. Der Puffer dient der Abfederung von Stößen zwischen Komponenten eines Automobil-Federungssystems.

DE 197 42 955 A1 offenbart ein Augenlager mit einem inneren, rohrförmigen Gehäuse, einem äußeren Rohrabschnitt und einen diese verbindenden elastisch nachgiebigen Federkörper. Der Federkörper besteht aus einem zelligen, elastomeren Werkstoff. Der äußere Rohrabschnitt weist Durchbrechungen auf, welche mit dem Werkstoff gefüllt sind. Ferner weist der äußere Rohrabschnitt Stege auf, wobei der Zwischenraum zwischen zwei Stegen mit dem Werkstück zumindest teilweise gefüllt ist. In einer Ausführungsform sind Teile des Rohrabschnitts von dem Werkstoff umschlossen, während Stege in einem Bereich zwischen zwei hervorstehenden Bereichen des Werkstoffs liegen. Augenlager werden in sehr großer Stückzahl in Straßenfahrzeugen eingesetzt. Es ist ihre Aufgabe, zwei Bauteile des Straßenfahrzeugs, z.B. die Karosserie mit dem radführenden Querlenker, elastisch miteinander zu verbinden. Die Verbindung ist dabei dergestalt, dass über das Augenlager Bewegungen zwischen den beiden Befestigungsteilen in den Hauptdreh- und/oder Haupttranslationsachsen ermöglicht werden.

DE 10 2005 055 178 B3 offenbart einen Halter für schwingungs- und/oder stoßempfindliche Elemente. Der Halter weist Befestigungsmittel zur Befestigung des Halters und Aufnahmemittel zur Aufnahme der Elemente auf. Aufnahme- und Befestigungsmittel sind über elastische Elemente verbunden, die an den Befestigungsmitteln angeordnet sind. Die elastischen Elemente sind wenigstens zweigeteilt, wobei die Aufnahmemittel zwischen den beiden Teilen angeordnet sind. Die Aufnahmemittel weisen an wenigstens einer Seite einen Vorsprung auf, welcher jeweils einen Teil der beiden Teile umgreift. Die Aufnahmemittel weisen weiterhin Laschen auf, welche zwischen den beiden Teilen angeordnet sind und an ihren von den Aufnahmemitteln abgewandten Stirnseiten sowie jeweils an den beiden an die jeweilige Stirnseite angrenzenden Seiten Vorsprünge haben, welche als abgebogene Enden der Laschen ausgebildet sind.

Dokument GB1505232A offenbart einen mit Silikonschaumstoff gefüllten Dampfer. Es wird als nächstliegender Stand der Technik angesehen.

Es ist daher eine Aufgabe der vorliegenden Erfindung, eine schwingungsdämpfende Abstützung von Lasten, insbesondere zum Abstützen eines Koordinatenmessgeräts anzugeben, die die zuvor genannten Nachteile zumindest teilweise vermeidet. Insbesondere soll die Abstützung auf einfache Weise herstellbar sein, leicht zu handhaben sein und ein geringes Gewicht aufweisen. Darüber hinaus soll die Abstützung möglichst unempfindlich gegen Einflüsse und Chemikalien, z. B. Feuchtigkeit, Temperaturänderungen und typischerweise in Laboren vorkommende Chemikalien wie Öle, Fett oder Alkohole sein. Ferner soll die Abstützung einen breiten Anwendungsbereich haben. Auch soll ein Herstellungsverfahren angegeben werden. Die beigefügten Patentansprüche definieren den Schutzumfang. Es wird ein Stützkörper zum schwingungsdämpfenden Abstützen von Lasten, insbesondere zum Abstützen eines Koordinatenmessgeräts oder eines anderen schwingungsempfindlichen Geräts oder einer Maschine, vorgeschlagen. Der Stützkörper weist ein Formteil aus expandierten Schaumstoff-Partikeln auf, die miteinander verbunden sind. Ferner weist der Stützkörper ein in das Formteil integriertes Stabilisierungsmodul auf.

Eine Grundidee der vorliegenden Erfindung liegt daher darin, einen Schaumstoff aus expandierten Schaumstoff-Partikeln als Verbundkörper mit dem Stabilisierungsmodul zu kombinieren. Unter Stabilisierung wird verstanden, dass der Schaumstoff-Körper Kräfte ableiten kann, die ihn anderenfalls stärker komprimieren (z. B. plastisch verformen), zerstören und/oder umstürzen lassen. Das Stabilisierungsmodul hat andere mechanische Eigenschaften als der Schaumstoff und stabilisiert insbesondere die Form des Schaumstoff-Körpers, wenn äußere Kräfte einwirken. Dadurch, dass das Stabilisierungsmodul aber in das Formteil integriert ist, ist das Stabilisierungsmodul gegen äußere Einflüsse, wie z.B. Feuchtigkeit und den Schaumstoff umgebende Chemikalien geschützt. Die Integration des Stabilisierungsmoduls in das Formteil schließt nicht aus, dass Teile des Stabilisierungsmoduls aus dem Schaumstoff herausragen, wie es bei dem Verbindungsbereich gemäß Anspruch 1 der Fall ist. Gemäß Anspruch 1 hat das Stabilisierungsmodul zumindest einen aus dem Formteil herausragenden Verbindungsbereich, an dem das Stabilisierungsmodul mit einem weiteren stabilisierenden Gegenstand verbindbar ist. Z.B. kann das Stabilisierungsmodul über den Verbindungsbereich mit einem weiteren Exemplar des Stützkörpers verbunden sein oder mit anderen Gegenständen, wie z.B. einer Wand verbunden sein.

Unter einem Formteil wird verstanden, dass der aus den expandierten Schaumstoff-Partikeln erzeugte Schaumstoff-Körper eine vorgegebene Form aufweisen kann und einen einstückigen Gegenstand bildet. Das Formteil kann (wie noch näher erläutert wird) unter Verwendung einer Form hergestellt werden, die somit die äußeren Abmessungen des Formteils vorgibt. Das Formteil kann jedoch auch ganz oder teilweise aus einem schon vorhandenen Schaumstoff-Körper erarbeitet werden, beispielsweise durch Abschneiden, Ausschneiden, Sägen, Bohren und/oder Fräsen.

Unter der Integration des Stabilisierungsmoduls in das Formteil wird verstanden, dass das Stabilisierungsmodul zumindest teilweise (d. h. ein Teil des Moduls) von dem Schaumstoff umgeben ist. Vorzugsweise schließt der Schaumstoff zumindest Teile des Stabilisierungsmoduls so in sich ein, dass bei üblicher Belastung während des bestimmungsgemäßen Gebrauchs eine Relativbewegung zwischen dem Schaumstoff-Körper und dem Stabilisierungsmodul weitgehend ausgeschlossen ist. Auftreten können jedoch auch in diesem Fall Verformungen des Schaumstoffs aufgrund des Einleitens von äußeren Kräften. Das Stabilisierungsmodul ist dagegen vorzugsweise so ausgestaltet und in das Formteil eingebracht, dass es bei Belastung des Stützkörpers nicht verformt wird.

Bei dem Stabilisierungsmodul handelt es sich um wiederum einen einstückigen Körper, der aber optional aus mehreren Bauelementen bestehen kann. Ein bevorzugtes Beispiel wird noch beschrieben. Grundsätzlich kann das Stabilisierungsmodul z.B. aus jedem festen Material bestehen oder aus mehreren verschiedenen festen Materialen bestehen, z.B. Metall, Kunststoff, Verbundwerkstoff (wie z.B. glasfaserverstärkter Kunststoff). Z.B. kann das Stabilisierungsmodul aus verschiedenen Stücken Metallblech gefertigt sein, die so miteinander verbunden sind, dass ein insgesamt formstabiler Körper gebildet ist.

Insbesondere kann das Stabilisierungsmodul einen Hohlraum mit Öffnungen an mehreren Seiten aufweisen, wobei der Hohlraum zumindest teilweise mit Schaumstoff-Partikeln ausgefüllt ist. Es ist daher möglich, dass die miteinander verbundenen Schaumstoff-Partikel sowohl das Innere des Hohlraums ausfüllen, als auch durch die Öffnungen hindurch eine stabile Verbindung zu weiteren Schaumstoffpartikeln außerhalb des Hohlraums aufweisen. Das Stabilisierungsmodul ist in diesem Fall besonders fest in das Formteil integriert, wobei ein besonders großer Teil des Formteils durch das Stabilisierungsmodul stabilisiert ist.

Es ist jedoch auch möglich, z.B. mehrere Stabilisierungsmodule in das Formteil zu integrieren, die z.B. einzeln, für sich betrachtet formstabil sind und daher jeweils eine Region des Formteils stabilisieren.

Die Formteile gemäß der vorliegenden Erfindung weisen insbesondere einen Partikel-Schaumstoff auf. Unter einem Partikel-Schaumstoff wird ein Schaumstoff verstanden, der Partikel aufweist, welche fest miteinander verbunden sind. Bei den Partikeln handelt es sich insbesondere um bereits vor dem Verbinden der Partikel expandierte oder zumindest teilweise expandierte Partikel. Partikel sind teilweise expandiert, wenn sie beim Verbinden der Partikeln oder danach noch weiter expandieren, d. h. ihr Volumen vergrößern.

Das Material der Schaumstoff-Partikel weist z. B. Polystyrol auf oder besteht aus Polystyrol mit Zusatzstoffen. Bevorzugt wird jedoch, dass das Material der Schaumstoff-Partikel, vorzugsweise aller Schaumstoff-Partikel ein Polyolefin-Material ist. Polyolefin-Schaumstoffe, insbesondere das besonders bevorzugte Polypropylen, zeichnen sich durch besonders hohe Belastbarkeit aus. Dabei führt die Tatsache, dass die Partikel expandiert sind, zu einem sehr geringen Gewicht des Formteils. Aufgrund der Struktur aus miteinander verbundenen (insbesondere netzartig miteinander verbundenen) expandierten Partikeln weist das Formteil darüber hinaus eine sehr hohe Elastizität und Flexibilität unter Last auf. Unter der Last können sowohl die einzelnen Partikel verformt werden als auch verbliebene Hohlräume zwischen den Partikeln verkleinert werden. Die Verformung ist abhängig von der Schwere der Last und der Dauer der Einwirkung der Last weitgehend reversibel. Als Last wird hier ein Gegenstand oder mehrere Gegenstände verstanden, der seine / die ihre Gewichtskräfte und gegebenenfalls weitere Kräfte in den Stützkörper einleiten.

Bevorzugte Beispiele für Polyolefine sind Homopolymere und Copolymere von Ethylen und Propylen. Besonders bevorzugt werden Propylen-Copolymere mit einem Schmelzpunkt von 125 bis 155 Grad Celsius. Der genannte Schmelzpunkt ist das nach der DSC (Dynamische Differenzkalorimetrie)-Methode bestimmte Maximum beim zweiten Schmelzen der Probe (kristalliner Schmelzpunkt). Die Polypropylen-Copolymere können z. B. 1 bis 30 Gewichts-%, insbesondere 1 bis 6 Gewichts-%, Ethylen und/oder einen solchen Anteil von C4 bis C6 - Alpha-Olefinen aufweisen. Propylen-Copolymere, die 1 bis 6 Gewichts-% Ethylen aufweisen sind besonders geeignet, da ein solcher Gewichtsanteil einen guten Kompromiss zwischen der Expandierbarkeit, dem Verhalten beim Bilden des Formteils (insbesondere das thermische Verschweißen der Partikel in Anwesenheit von Wasserdampf) und der Festigkeit (insbesondere der Druck-Belastbarkeit) darstellt.

Derartige Polyolefine zeichnen sich besonders, solange die normalen Raumtemperaturen nicht wesentlich überschritten werden, durch eine hohe Tragfähigkeit bei geringem Raumgewicht aus. Auch sind sie gegen sehr viele Chemikalien resistent oder können gegebenenfalls durch Zusatzstoffe (siehe unten) resistent ausgestaltet werden. Zumindest sind sie jedoch gegen Feuchtigkeit, d.h. Wasserdampf, unempfindlich.

Der Schaumstoff ist insbesondere ein Schaumstoff, der durch Verschweißen von Schaumstoff-Partikeln erhalten wird, wobei die Partikel in dem expandierten Zustand z. B. einen Durchmesser von 1 bis 8 mm, vorzugsweise von 2 bis 5 mm aufweisen. Die mittlere Dichte des Schaumstoffs liegt z. B. im Bereich von 15 bis 100 kg/m3, insbesondere im Bereich von 20 bis 60 kg/m3, bevorzugt im Bereich von 30 bis 50 kg/m3.

Die Schaumstoff-Partikel können optional die insbesondere für Polyolefin-Schaumstoff-Partikel, aber auch Polystyrol üblichen Zusatzstoffe enthalten, z. B. Farben, Pigmente, Füllstoffe, Substanzen zur Erhöhung der Festigkeit, Substanzen zur Erzielung einer Feuerresistenz, Substanzen, die ein Trennen des Vorteils von einer Form erleichtern, antistatische Substanzen, Stabilisatoren, Stoffe zur Erzielung an die statische Eigenschaften, Stoffe zur Erzielung einer Säurebeständigkeit, Schmierstoffe, Gleitstoffe. Diese Zusatzstoffe werden vorzugsweise in Mengen gefügt, sodass die gewünschten oder erwähnten Effekte erzielt werden. Stoffe zur Erzielung einer Säurebeständigkeit werden besonders bevorzugt. Ihr Anteil kann z. B. im Bereich von 0,05 bis 0,2 Gewichtsprozenten des Schaumstoff-Partikels liegen.

Das Formteil kann insbesondere annähernd quaderförmig ausgestaltet sein, wobei jedoch einzelne oder mehrere der Oberflächen auch gekrümmt sein können. Auch sind vorzugsweise einzelne der Oberflächen strukturiert, d.h. weisen z.B. Vorsprünge und/oder Ausnehmungen auf.

Bevorzugtermaßen hat das Formteil eine obere Oberfläche zum Einleiten von Kräften der aufzunehmenden Last als auch eine untere Oberfläche zum Ableiten der Last nach unten. Die Last kann somit direkt oder über dazwischen angeordnete weitere Gegenstände auf die obere Oberfläche aufgelegt werden, so dass die Last über die untere Oberfläche nach unten (z.B. in einem Fußboden) abgeleitet wird. Unter der Last wird sich der Schaumstoff-Körper zumindest teilweise verformen. Insbesondere können dadurch ungleichmäßige Belastungen der oberen Oberfläche ausgeglichen werden, d.h. werden etwa gleichmäßig über die untere Oberfläche abgeleitet. Das Stabilisierungsmodul stabilisiert den Schaumstoff-Körper und verhindert z.B. bei extrem ungleichmäßiger Belastung einen Bruch des Schaumstoff-Körpers und/oder ein Umkippen des Stützkörpers. Die unten noch zu beschreibende Ausgestaltung einer Stützkörper-Anordnung sichert zusätzlich gegen Umkippen

Die obere Oberfläche und/oder die untere Oberfläche ist/sind in konkreter Ausgestaltung so strukturiert, dass sie eine Mehrzahl von hervorstehenden Bereichen aufweist/aufweisen. Die hervorstehenden Bereiche sind durch das SchaumstoffMaterial, d. h. in der Regel durch mehrere Schaumstoff-Partikel gebildet. Diese hervorstehenden Bereiche haben vorzugsweise eine oder mehrere der folgenden Funktionen. Zum einen können so ungleichmäßige Belastungen durch lokal erhöhten Krafteintrag besonders gut ausgeglichen werden. Im Extremfall z.B. verformt sich lediglich ein hervorstehender Bereich so stark, dass er des darunter liegenden Gegenstandes, z.B. des Fußbodens, darauf liegenden Last ausweicht und die Krafteinwirkung von oben wieder gleichmäßig über die Oberfläche erfolgt. An der unteren Oberfläche können die hervorstehenden Bereiche in ähnlicher Weise Unregelmäßigkeiten ausgleichen. Die hervorstehenden Bereiche können jedoch auch als Führungen für zusätzliche an den Oberflächen anliegende Gegenstände genutzt werden, z.B. Distanzkörper zum Ausgleich der Höhenunterschiede an verschiedenen Exemplaren. Durch ein ineinander Eingreifen von nach unten abragenden Bereichen eines weiteren Körpers in die Räume zwischen den hervorstehenden Bereichen des Stützkörpers, kann eine gemeinsame Stützkonstruktion für eine Last gebildet und daher verhindert werden, dass die so einander kontaktierenden Gegenstände aneinander abrutschen.

Der Stützkörper kann alternativ oder zusätzlich auch eine nach oben offene Ausnehmung aufweisen. Das Abrutschen kann somit auch dadurch verhindert werden, dass in die Ausnehmung ein Element (z. B. aus kunststoffummanteltem Metall),eingebracht ist, welches direkt oder indirekt mit der Last verbunden ist.

Die soeben erwähnte Ausnehmung kann Teil eines in einem zentralen Bereich des Formteils angeordneten Hohlraums sein. Der Hohlraum ist, wie noch näher beschrieben wird, z. B. fertigungstechnisch bedingt. Während der Fertigung des Formteils kann an der Stelle des Hohlraums ein Hohlkörper liegen, durch den Gas und/oder Dampf zu den Schaumstoffpartikeln zugeführt wird.

Wie bereits erwähnt, gehört zum Umfang der Erfindung auch eine Stützkörper-Anordnung mit einer Mehrzahl der Stützkörper, die in dieser Beschreibung und in den Ansprüchen definiert sind. Bei der Anordnung sind zumindest zwei der Stabilisierungsmodule verschiedener Stützkörper paarweise durch zumindest einen Verbindungsgegenstand miteinander verbunden. Eines der paarweise verbundenen Stabilisierungsmodule ist mit dem Stabilisierungsmodul des anderen Stützkörpers verbunden. Zur Verbindung eignen sich z. B. Verbindungsgegenstände aus Metallblech und/oder Metallrohr. Vorzugsweise sind bei mehr als zwei Stützkörpern der Anordnung (z. B. zur Abstützung eines Koordinatenmessgeräts) jeweils die Stabilisierungsmodule mit den Stabilisierungsmodulen von zwei anderen Stützkörpern verbunden, so dass sich eine besonders stabile Stützkörper-Anordnung ergibt. In der Figurenbeschreibung wird noch ein Beispiel für eine solche Anordnung mit vier Stützkörpern näher beschrieben. Bei geeigneter Verbindung der Stabilisierungsmodule ist daher ein Umkippen der Stützkörper oder auch ein anderes unbeabsichtigtes seitliches Ausweichen ausgeschlossen.

Zum Umfang der Erfindung gehört ferner ein Verfahren zum Herstellen eines Stützkörpers zum schwingungsdämpfenden Abstützen von Lasten, insbesondere des Stützkörpers in einer der Ausgestaltungen, die in dieser Beschreibung und den Ansprüchen definiert sind. Bei dem Herstellungsverfahren werden eine Vielzahl von Schaumstoff-Partikeln und zumindest ein Stabilisierungsmodul aus einem anderen Material in eine Form eingebracht und wird aus den Schaumstoff-Partikeln ein Formteil gebildet, indem die Schaumstoff-Partikel mit einander verbunden werden. Dabei wird das Stabilisierungsmodul zumindest teilweise in das Formteil integriert.

Gemäß den Patentansprüchen wird jedoch auf die Oberflächen der Schaumstoff-Partikel ein Klebstoff aufgebracht, beispielsweise vor dem Einbringen in die Form, wobei der Klebstoff durch Zuführen eines den Klebstoff aktivierenden Gases aktiviert wird, d. h. die Wirkung des Klebstoffes erzielt wird. Auch andere Verfahren, die jedoch nicht Gegenstand der beigefügten Ansprüche sind, sind möglich. Z. B. kann ein anderes Gas und/oder ein anderer Dampf in die Form zugeführt werden, um die Schaumstoff-Partikel miteinander zu verschweißen.

Um aus den expandierten Schaumstoff-Partikeln das Formteil zu bilden, können die Schaumstoff-Partikel durch Erwärmen und Zuführen von Wasserdampf in eine Form, die die Schaumstoff-Partikeln enthält, miteinander verschweißt werden. Dies ist jedoch nicht Gegenstand der beigefügten Patentansprüche. Dabei kann das Erwärmen zumindest teilweise durch Einbringen von heißem Wasserdampf bewirkt werden. Auf ein zusätzliches Beheizen der Form oder ihres Inhaltes kann daher ganz oder teilweise verzichtet werden. Die Wärme wird stattdessen durch den heißen Wasserdampf zugeführt.

In einer Ausgestaltung des Herstellungsverfahrens ist in einem zentralen Bereich eines durch die Form gebildeten Hohlraumes, der die Schaumstoff-Partikel aufnimmt, ein Hohlkörper angeordnet. Die Schaumstoff-Partikel werden in den Hohlraum, aber nicht in das Innere des Hohlkörpers eingebracht. Dann wird ein Gas (Alternative, wenn auch nicht beansprucht: Wasserdampf und/oder ein anderer Dampf) durch das Innere des Hohlkörpers und anschließend durch Öffnungen in einer Wand des Hohlkörpers hindurch zu den Schaumstoff-Partikeln geführt, um die Schaumstoff-Partikeln miteinander zu verschweißen. Anders ausgedrückt weist der Hohlkörper z. B. Perforationen bzw. eine Vielzahl kleiner Durchgangslöcher auf, durch die der Dampf und/oder das Gas hindurchströmen kann. Die Form kann außerdem ebenfalls eine Vielzahl von Durchgangslöchern aufweisen, die ein Austreten des Dampfes und/oder des Gases erlauben, nachdem er/es zur Verbindung der Schaumstoff-Partikel beigetragen hat.

Das Gas und/oder der Dampf werden unter Druck in die Form zugeführt. Der erforderliche Druck ist abhängig von den Eintrittquerschnitten der Öffnungen des Hohlraumes, in dem sich die Schaumstoff-Partikel befinden, von den Austrittsquerschnitten der Öffnung oder der Öffnungen des Hohlraumes, durch die das Gas und/oder der Dampf den Hohlraum verlassen, und der Geschwindigkeit, mit der der Prozess des Verbindens der Schaumstoff-Partikel ablaufen soll.

Wenn heißer Wasserdampf eingesetzt wird, um die Schaumstoff-Partikel miteinander zu verbinden, bewirkt der Wasserdampf insbesondere, dass die Schaumstoff-Partikel an der Oberfläche durch Glasübergang in einen anderen Aggregatszustand übergehen, insbesondere einen gummielastischen Aggregatzustand. In diesem anderen Aggregatzustand können sich die Bereiche benachbarter Schaumstoff-Partikel miteinander verbinden. Nach Abkühlung unter die Glasübergangstemperatur bleibt die Verbindung erhalten. Um die Eigenschaften des Schaumstoffs in dem überwiegenden Teil der Schaumstoff-Partikel zu bewahren, sollte die Glasübergangstemperatur nur kurzzeitig und lokal überschritten werden. Der Prozess kann daher optimiert werden, indem gleichzeitig ein geeignetes Gas (z. B. Pentan-Gas) zugeführt wird, um die Schaumstoff-Partikel während des Prozesses der Verbindung weiter zu expandieren. Der durch die Expansion erzeugte Druck an den Kontaktstellen der einzelnen Schaumstoff-Partikel beschleunigt das Herstellen der Verbindung und erhöht die Zuverlässigkeit der Verbindung zwischen den Schaumstoff-Partikeln.

Ferner gehört zum Umfang der Erfindung auch ein Verfahren zur schwingungsdämpfenden Abstützung einer Last, insbesondere eines Koordinatenmessgeräts. Es wird zumindest ein Stützkörper bereitgestellt, wobei es sich dabei insbesondere um einen Stützkörper handelt wie er in dieser Beschreibung und/oder in den Patentansprüchen definiert ist. Der Stützkörper weist ein Formteil aus expandierten Schaumstoff-Partikeln auf, die miteinander verbunden sind. Ferner ist in das Formteil ein Stabilisierungsmodul integriert. Die Last, insbesondere ein Messtisch des Koordinatenmessgeräts, wird auf den Stützkörper aufgelegt. Dabei wird unter Auflegen auch verstanden, dass sich zwischen dem aufgelegten Gegenstand und dem Stützkörper noch ein dazwischen liegender Gegenstand, wie z.B. eine Distanzscheibe, befindet. Der Gegenstand kann jedoch auch unmittelbar auf das Formteil aufgelegt werden.

Die Erfindung ermöglicht es, den auf den oder die Stützkörper aufgelegten Gegenstand gegen äußere Anregung von Schwingungen zu isolieren. Außerdem werden jedoch auch Schwingungen in dem Stützkörper gedämpft, die sich von dem aufgelegten Gegenstand auf den Stützkörper übertragen. Aufgrund des Schaumstoffmaterials und des integrierten Stabilisierungsmoduls wird ein hoher Schwingungs-Dämpfungsfaktor erzielt.

Der Stützkörper kann weitere Teile aufweisen, die fest oder lose mit ihm verbunden sind, z. B. Distanzscheiben, die Zwischenräume zwischen Vorsprüngen an der Oberfläche des Schaumstoff-Körpers einnehmen. Z.B. können aber außerdem Verbindungsmittel wie Schrauben und Muttern an den Verbindungsbereichen des Stabilisierungsmoduls vorgesehen sein, z. B. um daran einen Verbindungsgegenstand zu befestigen.

Ausführungsbeispiele der Erfindung werden nun unter Bezugnahme auf die beigefügte Zeichnung beschrieben. Die einzelnen Figuren der Zeichnung zeigen:
- Figur 1: eine dreidimensionale Darstellung eines Stützkörpers,
- Figur 2: einen vertikalen Schnitt durch den in Figur 1 dargestellten Stützkörper, wobei jedoch am rechten Rand der Figur 2 Bereiche des Schaumstoff-Körpers weggelassen sind, um einen Verbindungsbereich des in das Formteil integrierten Stabilisierungsmoduls darzustellen,
- Figur 3: eine Ansicht von oben auf den in Figur 1 und Figur 2 dargestellten Stützkörper,
- Figur 4: eine Stützkörper-Anordnung mit vier Stützkörpern, die jeweils mit zwei benachbarten Stützkörpern verbunden sind,
- Figur 5: eine Ansicht von oben auf die Anordnung gemäß Figur 4,
- Figur 6: eine Seitenansicht von rechts auf die in Figur 4 und Figur 5 dargestellte Anordnung, wobei einer der darin dargestellten Stützkörper in Schnittdarstellung gezeigt ist,
- Figur 7: ein Verbindungselement der in Figur 4 bis Figur 6 dargestellten Anordnung,
- Figur 8: eine Teildarstellung der in Figur 4 bis Figur 6 dargestellten Anordnung, aus der die Verbindung zweier Stützkörper über das in Figur 7 dargestellte Verbindungselement erkennbar ist,
- Figur 9: die Anordnung gemäß den Figuren 4 bis 6 und 8, wobei auf die Anordnung ein Messtisch für ein Koordinatenmessgerät aufgelegt ist,
- Figur 10: eine Scheibe mit Ausnehmungen, die auf den Stützkörper gemäß Figur 1 bis Figur 3 aufgelegt werden kann,
- Figur 11: ein Distanzstück, das alternativ oder zusätzlich zu der in Figur dargestellten Scheibe auf einen Stützkörper gemäß Figuren 1 bis 3 aufgelegt werden kann, um eine Distanz zwischen dem Stützkörper und einem aufgelegten Gegenstand zu überbrücken bzw. herzustellen,
- Figur 12a - Figur 12d: eine schematische Darstellung eines Verfahrens zur Herstellung eines Stützkörpers und
- Fig. 13: eine bevorzugte Ausführungsform eines Stabilisierungsmoduls.

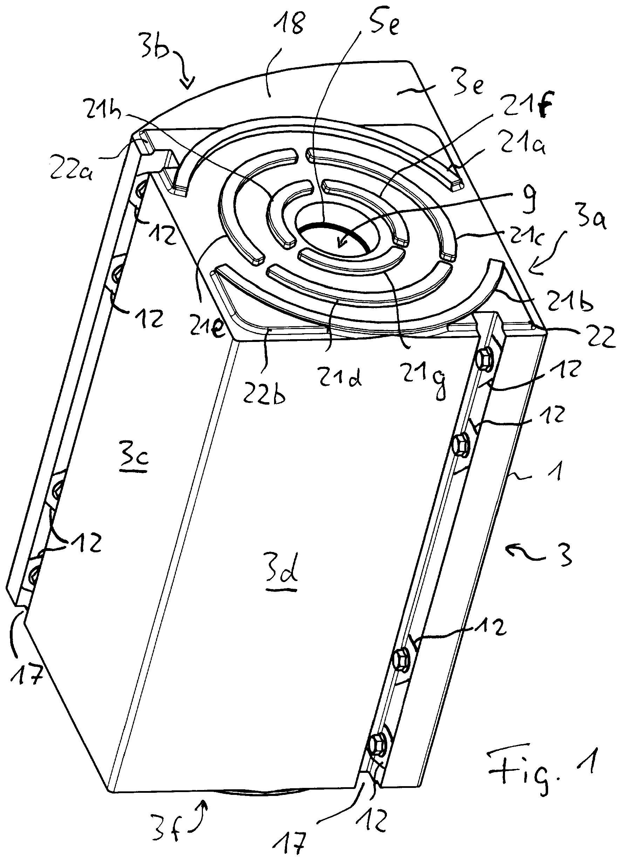

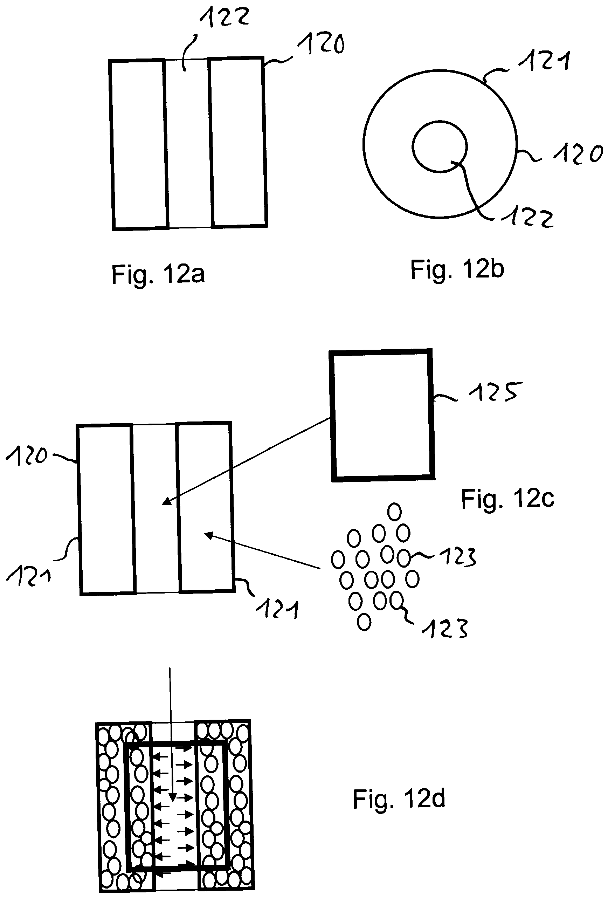

Die Fig. 1, 2, 3 und 13 zeigen eine bevorzugte Ausführungsform eines erfindungsgemäßen Stützkörpers zum schwingungsdämpfenden Abstützen von Lasten. Der Stützkörper 1 ist im Wesentlichen aus zwei verschiedenen Materialien hergestellt. Zum einen weist er einen Schaumstoff-Körper 3 auf, der vorzugsweise aus expandierten Polyolefin-Schaumstoffpartikeln hergestellt worden ist. Eine bevorzugte Variante eines Verfahrens zum Herstellen des Stützkörpers 1 wird noch anhand von Fig. 12 beschrieben. Außerdem weist der Stützkörper 1 ein Stabilisierungsmodul aus einem festen, formstabilen Material, insbesondere Stahl, auf.

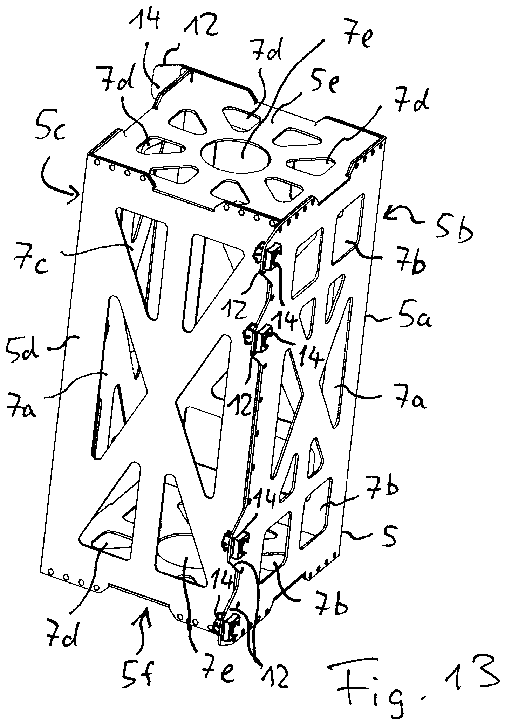

Der Stabilisierungskörper 5 ist in Fig. 13 dreidimensional dargestellt. Man erkennt, dass das Stabilisierungsmodul 5 in der Art eines hohlen Quaders mit 6 annähernd in einer Ebenen verlaufenden Außenflächen konstruiert ist. Jede der Außenflächen wird durch ein mit mehreren Öffnungen durchbrochenes in einer Ebene verlaufendes Oberflächenelement 5a-5f gebildet. Dabei können die Oberflächenelemente 5a-5f zumindest teilweise durch ein gemeinsames Stück Material gebildet sein. Z.B. können die Oberflächenelemente 5a (rechts in Fig. 13) und 5b (hinten in Fig. 13) aus einem um 90° abgewinkelten Stück Metall hergestellt worden sein. Das gleiche gilt für die Oberflächenelemente 5c (links in Fig. 13) und 5d (vorne in Fig. 13). Diese beiden Stücke Metall sind z.B. miteinander vernietet, verlötet und/oder verschweißt.

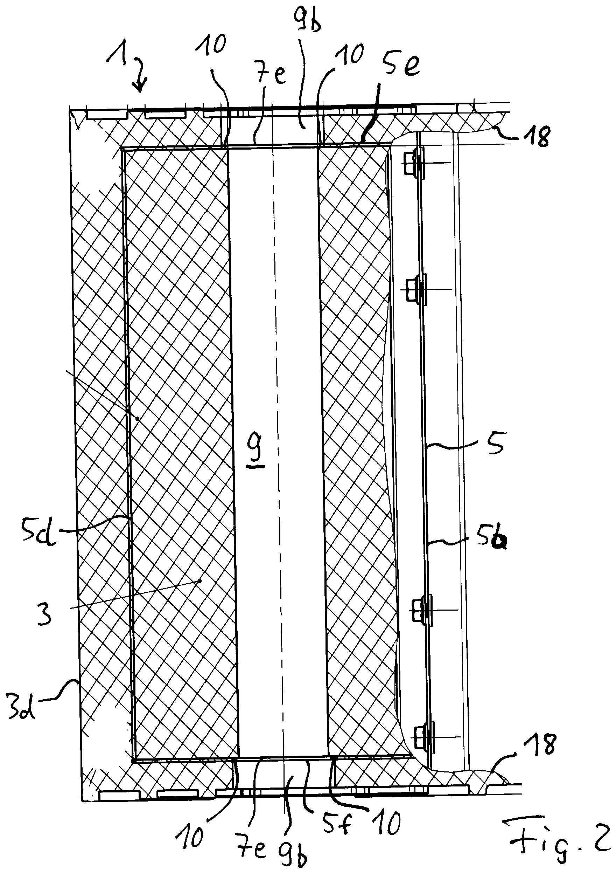

Das obere Oberflächenelement 5e und das untere Oberflächenelement 5f sind in der speziellen in Fig. 13 dargestellten Ausführungsform ebenfalls jeweils aus einem Stück Metall hergestellt und können auf dieselbe Art mit den benachbarten Oberflächenelementen 5a-5d verbunden sein, wie zuvor beschrieben. Die Oberflächenelemente 5e und 5f weisen, wie bereits erwähnt, jeweils eine Mehrzahl von Durchgangsöffnungen auf, von denen einzelne in Fig. 13 mit dem Bezugszeichen 7 und einem zusätzlichen Kleinbuchstaben bezeichnet sind, also mit 7a-7e. Gleiche Bezugszeichen bezeichnen dabei Durchgangsöffnungen gleicher Form. Die Meisten dieser Durchgangsöffnungen 7 haben einerseits die Funktion, das Gewicht des Stabilisierungsmoduls 5 zu reduzieren, und andererseits die Funktion, es dem Schaumstoffkörper 3 zu ermöglichen, sich durch die Durchgangsöffnungen 7 hindurch zu erstrecken, so dass sich das Material des Schaumstoffkörpers 3 sowohl innerhalb als auch außerhalb des Stabilisierungsmoduls 5 befindet und diese Berieche miteinander verbunden sind (siehe Fig. 2).

Dies gilt jedoch nicht für die Durchgangsöffnungen 7e, die zentral in den Oberflächenelementen 5e und 5f angeordnet sind. Diese Durchgangsöffnungen 7e sind in der dargestellten Ausführungsform kreisrund, wobei der Mittelpunkt des Kreises auf dem Schnittpunkt der Diagonalen liegt, die sich geradlinig von den Außenecken des Oberflächenelements 5e bzw. 5f zu der gegenüberliegenden Außenecke erstreckt. In dem fertiggestellten Stützkörper 1 (siehe z.B. Fig. 1 und Fig. 2) befindet sich in den Durchgangsöffnungen 7e kein Schaumstoffmaterial. Ebenso befindet sich in einem im Wesentlichen zylindrischen Hohlraum 9 des Stützkörpers 1 insgesamt kein Schaumstoffmaterial, wobei die Durchgangsöffnungen 7e sich unten und oben in dem Hohlraum 9 befinden. Allerdings befinden sich die Durchgangsöffnungen 7e des Stabilisierungsmoduls 5 nicht ganz oben bzw. ganz unten in dem Hohlraum 9. Vielmehr erweitert sich der zylindrische Bereich des Hohlraums 9, der sich zwischen den Durchgangsöffnungen 7e erstreckt, zu den Enden des Hohlraums 9 auf einen größeren Zylinderdurchmesser. Es ist daher an den Durchgangsöffnungen 7e jeweils oben und unten in dem Hohlraum 9 eine Schulter 10 gebildet.

Diese Schulter 10 ermöglicht es, von außen einen Gegenstand in den Hohlraum 9 einzuführen, dessen Außenabmessungen etwa dem Innendurchmesser des erweiterten zylindrischen Bereichs entsprechen, welcher sich an den Enden des Hohlraums 9 befindet. Dabei kann die Durchtrittsöffnung 7e so bemessen sein, dass sie einen kleineren Innendurchmesser als die Endbereiche 9b hat, so dass ein in das Ende des Hohlraums 9 eingeführter Gegenstand (oder Bereich eines Gegenstandes) mit entsprechenden Außenabmessungen an dem Material des Oberflächenelements 5e bzw. 5f des Stabilisierungsmoduls 5 anstößt und nicht weiter (tiefer) in den Hohlraum 9 eingeführt werden kann. Somit können an den Enden des Hohlraums 9 auch Kräfte in den Stabilisierungskörper 5 eingeleitet werden. Solange sich aber nicht sowohl an dem einen als auch an dem anderen Ende des Hohlraums 9 ein solcher eingeführter Gegenstand befindet, werden diese eingeleiteten Kräfte nicht unmittelbar über das Stabilisierungsmodul 5 durch den Stützkörper 1 hindurchgeleitet, sondern werden vielmehr auch über das Schaumstoffmaterial des Schaumstoff-Körpers 3 abgeleitet. Daher ist auch in diesem Fall eine schwingungsdämpfende Wirkung bzw. schwingungstechnische Entkopplung der eingeleiteten Last zu dem Untergrund gewährleistet.

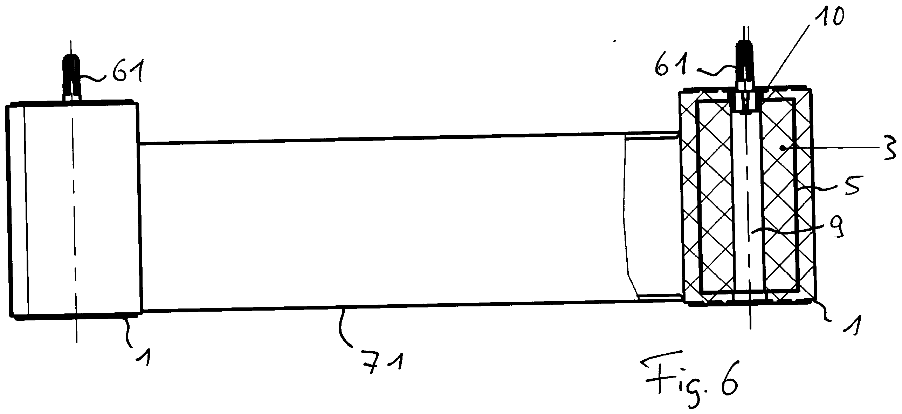

Ein Gegenstand, der beispielsweise in das obere Ende des Hohlraums 9 eingebracht werden kann, ist aus der Anordnung in Fig. 6 erkennbar, auf die noch näher eingegangen wird. Der Gegenstand ist mit dem Bezugszeichen 61 bezeichnet und besteht z. B. aus Metall, das mit Kunststoff ummantelt ist. Man erkennt auch, dass der Gegenstand sich zwar an der Schulter 10, d.h. an dem Stabilisierungsmodul 5, abstützt, ein schmalerer Teil des Gegenstands 61 aber tiefer in den Hohlraum 9 als die Schulter 10 eindringt.

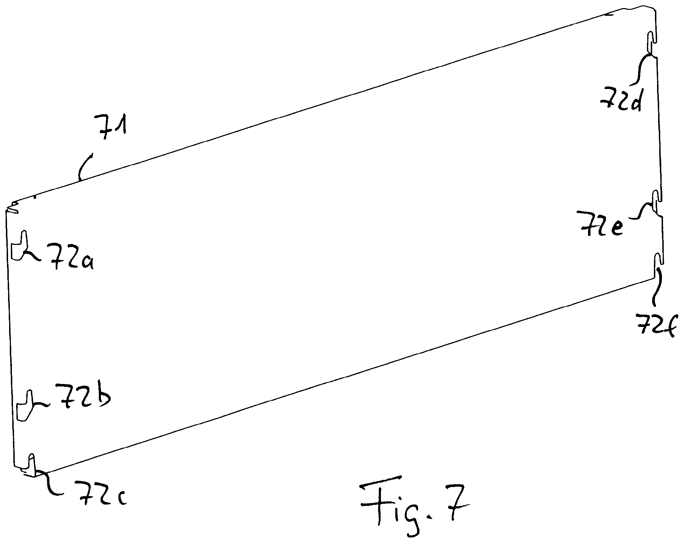

Zurückkommend auf Fig. 13 und die Darstellung des Stabilisierungsmoduls 5 erkennt man an den Oberflächenelementen 5a und 5b ausgebildete Fortsätze 12, die sich über die Außenfläche des Quaders hinaus in Fortsetzung der ebenen Verläufe der Oberflächenelemente 5a, 5b erstrecken. An der vorne in Fig. 13 des Oberflächenelements 5a dargestellten Kante und an der links hinten in Fig. 13 dargestellten Kante des Oberflächenelements 5b befinden sich jeweils vier der Fortsätze 12, die über die Erstreckung der Kante verteilt sind. An jedem der Fortsätze sind Befestigungsmittel 14 angeordnet, die in dem Ausführungsbeispiel eine Schraube und eine Mutter aufweisen, wobei die Schraube sich durch eine in dem Fortsatz 12 ausgebildete Durchgangsbohrung hindurch erstreckt. Somit können Gegenstände an den Fortsätzen 12 befestigt werden. Auf die Gegenstände, insbesondere ein Verbindungsblech 71, wie es in Fig. 7 dargestellt ist, wird noch eingegangen.

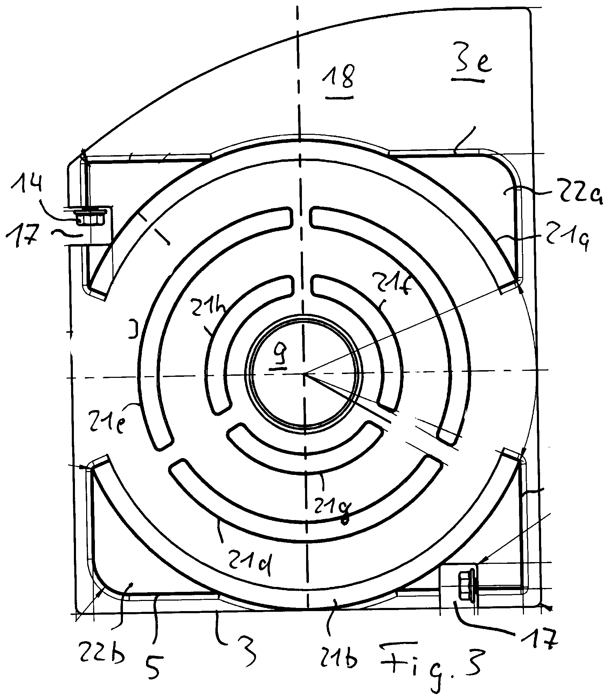

Die Fortsätze 12 befinden sich in der Ausführungsform des Stützkörpers 1, die in Fig. 1 und Fig. 3 gut erkennbar ist, in Aussparungen 17 des Schaumstoff-Körpers 3, wobei sich die Aussparungen über die gesamte Höhe in geradliniger Richtung an verschiedenen Außenflächen des Schaumstoff-Körpers 3 befinden, im Ausführungsbeispiel an den Außenflächen 3c und 3d, die etwa in einer Ebene verlaufen. Die Bezugszeichen 3a-3f der Außenflächen des Schaumstoff-Körpers 3 sind so gewählt, dass sie Außenflächen bezeichnen, welche etwa parallel zu den Oberflächenelementen des Stabilisierungsmoduls 5 mit dem gleichen Kleinbuchstaben verlaufen. Z.B. verläuft die etwa ebene Außenfläche 3a des Schaumstoff-Körpers 3 parallel zu dem Oberflächenelement 5a des Stabilisierungsmoduls 5.

Aufgrund der Aussparungen 17 an den Außenflächen 3c, 3d sind die Fortsätze 12 zugänglich für die Befestigung von externen Gegenständen, die sich etwa senkrecht zu der ausgesparten Oberfläche in die Aussparung 17 hineinerstrecken.

Wenn in dieser Figurenbeschreibung von oben, unten, rechts und links die Rede ist, so bezieht sich dies auf die Darstellung in den Figuren. Z.B. ist es aber möglich, dass der Stützkörper 1 im Vergleich zu der Darstellung in Fig. 1 umgedreht wird und die in Fig. 1 oben liegende Seite sich daher unten befindet.

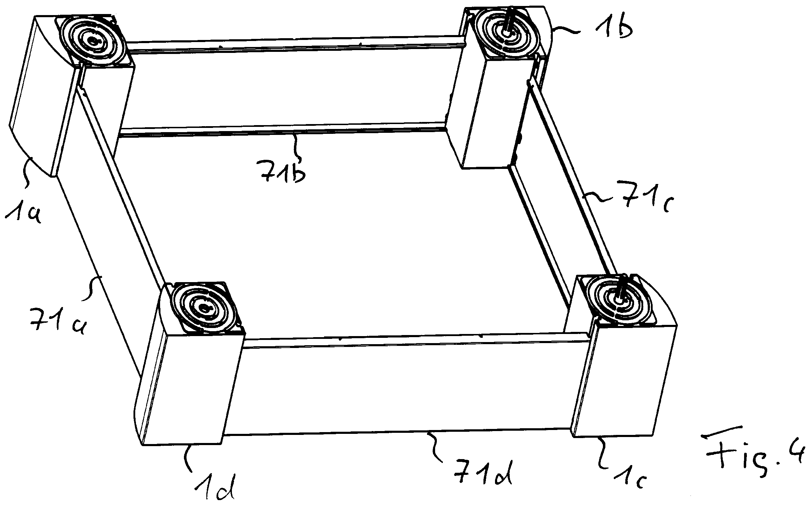

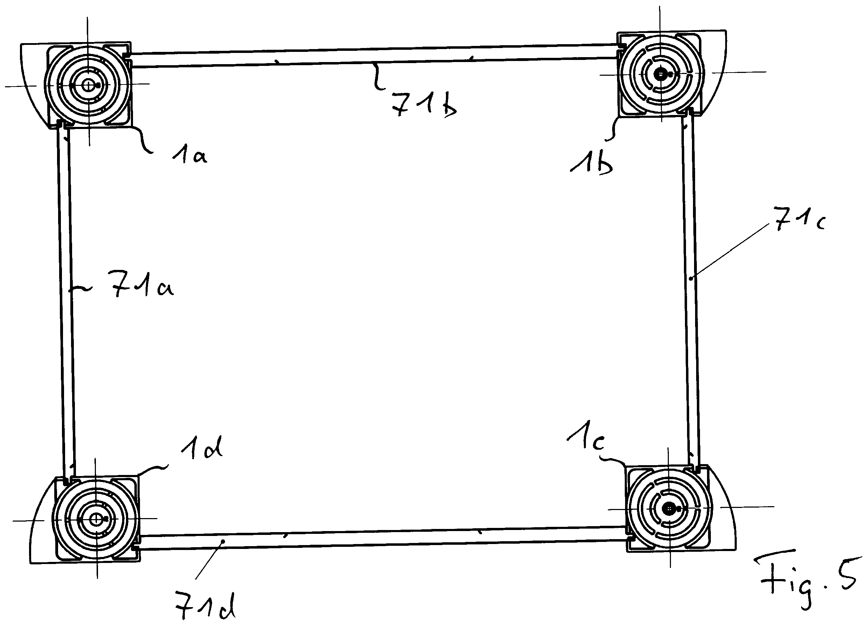

Bei der bevorzugten Ausgestaltung des Stützkörpers ist der Stützkörper symmetrisch zu einer horizontalen Ebene auf halber Höhe ausgestaltet, so dass er auch bei der umgekehrten Orientierung in gleicher Weise benutzt werden kann. Dies ist deshalb besonders nützlich, da auf diese Weise identische Stützkörper dazu verwendet werden können, die Anordnung zu erzeugen, die z. B. in Fig. 4 und Fig. 5 dargestellt ist.

Im Folgenden wird nun die äußere Form des Schaumstoff-Körpers 3 näher beschrieben. Dabei ist zu beachten, dass bei der Darstellung in Figur 2 im rechten Figurenteil ein Teil des Schaumstoff-Körpers 3 ausgespart dargestellt ist, um die Verbindungsmittel des Stabilisierungsmoduls 5 an der Außenfläche 3c des Schaumstoff-Körpers 3 im Profil darstellen zu können. Die Form der Außenflächen des Schaumstoff-Körpers 3, nämlich der Außenflächen 3c, 3d, wurde bereits zuvor beschrieben. Insgesamt weist der Schaumstoff-Körper 3 eine im Wesentlichen quaderförmige Außenform auf, wobei jedoch eine der bei einem Quader eben ausgestalteten Außenflächen als gekrümmte Außenfläche 3b ausgestaltet ist und wobei daher eine Außenfläche, nämlich die Außenfläche 3a, länger als die gegenüberliegende, parallel verlaufende Außenfläche 3c ausgestaltet ist. Auf diese Weise kann bei der in Fig. 4 und Fig. 5 dargestellten Gesamtanordnung eine zusätzliche Stabilität erreicht werden. Außerdem bildet der an der gekrümmten Außenfläche 3b verlaufende Außenbereich 18 des Schaumstoff-Körpers 3 einen zusätzlichen Stoßpuffer gegen Stöße, die von seitlich außen gegen den Bereich 18 ausgeübt werden.

Die obere Oberfläche 3e und die untere Oberfläche 3f sind wie bereits erwähnt in dem Ausführungsbeispiel und auch sonst bevorzugtermaßen in gleicher Weise ausgeformt. Sie weisen zwei gegenüber dem ebenen Grundniveau der oberen Oberfläche 3e erhabene Bereiche 22a, 22b auf, und außerdem sind weitere erhabene Bereiche 21a-21h vorgesehen, die sich von dem Grundniveau aus nach oben erstrecken. Diese Bereiche 21 sind in der Art von Kreisringsegmenten geformt und um den durch die zentrale Öffnung des Hohlraums 9 gebildeten Mittelpunkt herum verlaufend angeordnet. Dabei bilden drei innere Kreisringsegmente 21f, 21g, 21h einen inneren Kreis um die zentrale Öffnung des Hohlraums 9. Dabei ist jeweils ein Zwischenraum zwischen den benachbarten Kreisringsegmenten 21f, 21g, 21h vorhanden. Drei weitere Kreisringsegmente 21c, 21d, 21e bilden einen mittleren Kreisring um die Öffnung des Hohlraums 9, wobei wiederum zwischen den benachbarten Kreisringsegmenten 21c, 21d, 21e jeweils ein Abstand vorhanden ist, die in radialer Richtung geradlinig zu den Abständen zwischen den inneren Kreisringsegmenten ausgerichtet sind. Ferner sind zwei äußere Kreisringsegmente 21a, 21b vorgesehen. Auch diese Kreisringsegmente weisen den gleichen Radius zueinander auf und sind zu dem Mittelpunkt der zentralen Öffnung des Hohlraums 9 zentriert. Die beiden Kreisringsegmente 21a, 21b haben größere Abstände zueinander, die radial nicht mit den Abständen der mittleren und inneren Kreisringsegmente ausgerichtet sind.

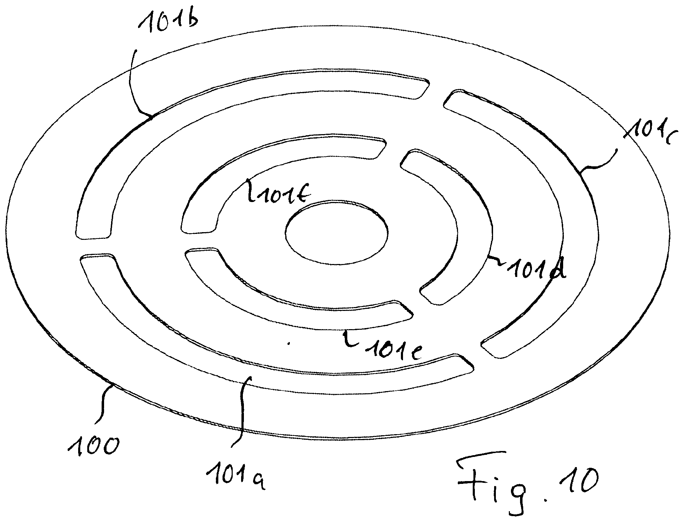

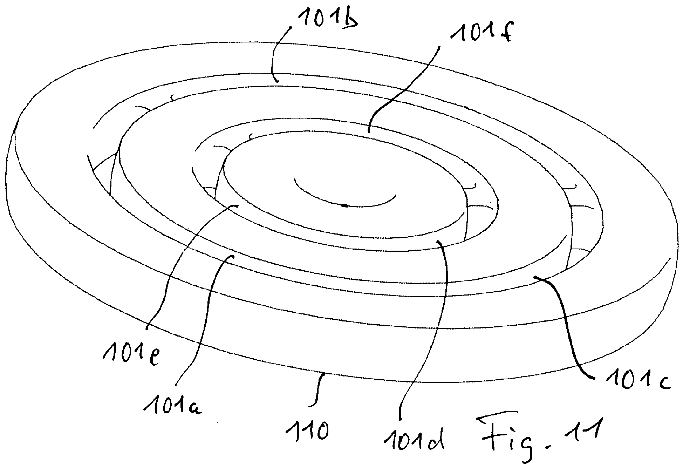

Diese Gestaltung der Oberfläche ermöglicht es, ein Bauteil, wie es in Fig. 10 dargestellt ist, oder ein anderes Bauteil, z.B. wie es in Fig. 11 dargestellt ist, auf das Grundniveau der Oberfläche 3e aufzulegen, so dass das Bauteil 100 bzw. 110 auch zwischen den Kreisringsegmenten 21 auf dem Grundniveau der Oberfläche 3e aufliegt. Die Bauteile 100 bzw. 110 weisen daher entsprechend den mittleren und inneren Kreisringsegmenten geformte und angeordnete Aussparungen 101a-101f auf. Der Unterschied zwischen den Bauteilen 100 und 110 besteht lediglich darin, dass das Bauteil 110 eine größere Dicke hat und daher höher über das Grundniveau der Oberfläche 3e hinaufragt, wenn es aufgelegt ist. Außerdem können die Aussparungen 101, die sich in demselben Radius zueinander um das Zentrum der kreisringförmigen Aussparungen erstrecken, in dem Fall des Bauteils 110 am oberen Ende des Bauteils 110 miteinander durchgehend verbunden sein, da das Bauteil 110 höher ist als die Kreisringsegmente 21. Auch ist es möglich, das Bauteil 100 auf die Oberfläche 3e aufzulegen und, da das Bauteil 100 nicht so hoch ist, wie die Kreisringsegmente 21, das Bauteil 110 zusätzlich auf das Bauteil 100 zu legen.

Gemäß diesem Prinzip können weitere Bauteile in der Art der Bauteile 100 und 110 vorgesehen sein, so dass ein Abstandsausgleich bzw. Ausgleich von Höhen oder Maßunterschiede von verschiedenen Stützkörpern zu einem darüber liegenden Gegenstand, z.B. einer Granitplatte, vorgenommen werden kann. Der Höhenausgleich findet beispielsweise in der Art von geeignet dimensionierten Beilagscheiben statt. Dabei sind es in den Figuren gezeigten Ausführungsformen keine Beilagscheiben konventioneller Art, sondern die in Fig. 10 und Fig. 11 beispielhaft dargestellten Bauteile.

Es ist aber auch möglich, direkt auf die Oberfläche 3e oder auf z.B. das Bauteil 100 gemäß Fig. 10 ein in der Art des Bauteils 110 geformtes vorspringendes Teil aufzulegen, welches zu der aufzulegenden Last gehört oder mit dieser verbunden ist.

Die in den Figuren gezeigte Ausführungsform ist hinsichtlich der Form des Schaumstoff-Körpers, der Gestaltung des Stabilisierungsmoduls, der Gesamtanordnung aus Stabilisierungsmodul und Schaumstoff-Körper und hinsichtlich anderer Merkmale lediglich ein Beispiel. Die in der Figurenbeschreibung genannten auf dieses Ausführungsbeispiel bezogenen Merkmale können auch einzeln oder in beliebiger Kombination bei anderen Ausführungsformen des Stützkörpers vorhanden sein.

Z.B. kann auch ein anders ausgestalteter Stützkörper symmetrisch zu einer auf halber Höhe liegenden horizontalen Spiegelebene gestaltet sein oder in anderer Weise so gestaltet sein, dass er an gegenüberliegenden Außenflächen wahlweise oben oder unten belastet werden kann (d.h. auch umgedreht werden kann), können die von außen zugänglichen Befestigungsbereiche des Stabilisierungsmoduls anders gestaltet sein oder an anderen Bereichen des Stützkörpers von außen zugänglich sein, kann (insbesondere bei wesentlich größeren Stützkörpern) mehr als ein nach außen offener Hohlraum in dem Stützkörper vorhanden sein (um bei der Herstellung Gase und oder Dämpfe durch den Schaumstoff zu leiten) und/oder können die vorspringenden Bereiche an der Oberseite oder Unterseite des Schaumstoff-Körpers weggelassen werden oder anders gestaltet sein.

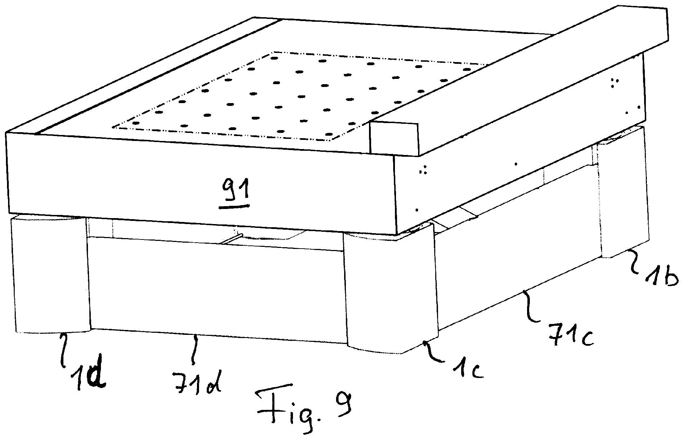

Anhand der Fig. 4 bis 8 wird nun eine Anordnung zum schwingungsdämpfenden Abstützen von Lasten beschrieben. Fig. 9 zeigt eine Last auf einer solchen Anordnung.

Aus der dreidimensionalen Darstellung der Fig. 4 und aus der Ansicht von oben gemäß Fig. 5 ist erkennbar, dass die Anordnung vier Stützkörper 1a-1d aufweist, die an Positionen, welche den Ecken eines Rechtecks entsprechen, angeordnet sind. Diese Stützkörper 1 sind jeweils paarweise mit ihrem benachbarten Stützkörper über einen Verbindungsgegenstand, nämlich hier dem in Fig. 7 dargestellten Verbindungsblech 71, verbunden. Dabei ist das Blech 71 in der Anordnung in unterschiedlichen Längen vorgesehen. Daher ist der Abstand z.B. zwischen dem Stützkörper 1a und dem Stützkörper 1d einerseits und dem Stützkörper 1a und dem Stützkörper 1b andererseits entsprechend der Länge der Verbindungsbleche 71a, 71b unterschiedlich.

Die Stützkörper 1a bis 1d sind identisch ausgestaltet. Jedoch sind die Stützkörper 1a und 1c einerseits und die Stützkörper 1b und 1d andererseits umgekehrt orientiert, d.h. beim Austauschen der Stützkörper 1a, 1b müssten beide Stützkörper umgedreht werden, bevor sie wieder an den vorgesehenen Positionen mit den Verbindungsblechen 71 verbunden werden können. Zum Verbinden der Verbindungsbleche 71 mit den Stützkörpern 1 weisen die Verbindungsbleche 71 an ihren gegenüberliegenden Enden Aussparungen 72a-72f auf. An den Aussparungen 72 werden die Verbindungsbleche in jeweils drei der übereinander liegenden Verbindungsbereichen an den Verbindungsmitteln, insbesondere den Schrauben, eingehängt. Anschließend können die Schrauben angezogen werden, so dass die Verbindung gesichert ist.

Die Stützkörper 1a bis 1d sind insbesondere genauso ausgestaltet, wie es bereits anhand der Fig. 1 bis 3 erläutert wurde.

Wie bereits kurz beschrieben wurde, zeigt Fig. 6 einen Gegenstand 61 für jeden der Stützkörper 1, wobei der Gegenstand 61 in das oben offene Ende des Hohlraums 9 eingesetzt ist. Um dies besser darzustellen, ist bei der Ansicht gemäß Fig. 6 auf die in Fig. 4 und 5 dargestellte Anordnung der rechts in Fig. 6 dargestellte Stützkörper 1 aufgeschnitten dargestellt. Wie auch der Schnitt gemäß Fig. 2 ist der Schnitt des rechten Stützkörpers in Fig. 6 ein vertikaler Schnitt durch die Mitte des Hohlraums, so dass der Hohlraum längs von oben nach unten mittig geschnitten erkennbar ist.

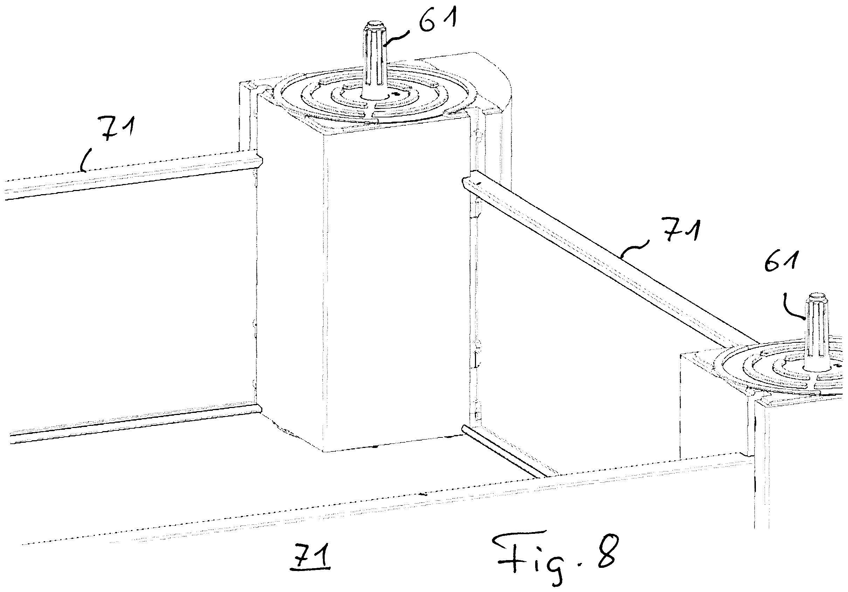

Mit den Gegenständen 61, die von oben in den Hohlraum eingesetzt sind, sind insbesondere alle vier Stützkörper 1a bis 1d der Anordnung gemäß Figur 5 und Figur 6 ausgestattet. Eine perspektivische Teildarstellung mit den eingesetzten Gegenständen 61 zeigt Figur 8. Figur 9 wiederum zeigt, dass auf die Anordnung der Stützkörper und Verbindungsfläche ein Messtisch für ein Koordinatenmessgerät aufgesetzt ist. Dabei greifen die Gegenstände 61 (nicht dargestellt) in Ausnehmungen unten an dem Messtisch 91 ein. Der Messtisch ist insbesondere aus Granit hergestellt.

Es wird nun ein Verfahren zur Herstellung des Stützkörpers, z. B. des in Figur 1 und Figur 2 dargestellten Stützkörpers erläutert.

Figur 12a zeigt schematisch eine Schnittdarstellung mit einem vertikalen Schnitt durch eine Form 120. Eine Ansicht von oben auf die Form 120 ist in Figur 12b dargestellt. Die Form 120 ist als Hohlzylinder ausgeformt, d. h. koaxial zu den äußeren Zylinderwänden 121 befindet sich in der Mitte der Form 120 eine zylindrische Aussparung 122. Wie nicht näher in Figur 12a und Figur 12b dargestellt ist, weisen sowohl die Wände der zylindrischen Aussparung 122 als auch die Außenwände 121 eine Vielzahl von kleinen Durchtrittsöffnungen auf, die beispielsweise kreisförmigen Querschnitt haben und 0,2 bis 0,7 mm Außendurchmesser haben. Diese Durchtrittsöffnungen ermöglichen den Durchtritt von Gasen oder Dämpfen, wie noch näher beschrieben wird.

Im nächsten Schritt wird zunächst das Stabilisierungsmodul 125, welches beispielsweise das Stabilisierungsmodul 5 gemäß Figur 13 sein kann, in die Form 120 eingebracht. Dies gelingt beispielsweise dadurch, dass die Form 120 auf halber Höhe teilbar ist. Im Ergebnis befindet sich dann das Stabilisierungsmodul 125 innerhalb der Form 120, wie es dann aus Figur 12d erkennbar ist. Dabei erstrecken sich die in vertikaler Richtung verlaufenden Wandelemente des Stabilisierungsmoduls 125 in dem Bereich der Form außerhalb der zylindrischen Aussparung 122, d. h. zwischen der zylindrischen Innenwand, die die zylindrische Ausnehmung 122 umschließt, und der Außenwand 121.

Anschließend wird eine Vielzahl von teilweise expandierten Polyolefin-Partikeln, insbesondere Polypropylen-Partikeln mit möglicherweise Zusatzstoffen und/oder einer Beimischung von Polyethylen in den hohlzylindrischen Bereich der Form 120 eingefüllt, z. B. durch eine nicht näher dargestellte Einfüllöffnung der Form 120. Das Resultat ist in Figur 12d schematisch dargestellt. Jedoch ist der hohlzylindrische Bereich der Form 120 vorzugsweise annähernd vollständig mit den Schaumstoff-Partikeln 123 befüllt.

Anschließend wird ebenfalls wie in Figur 12 schematisch dargestellt heißer Wasserdampf mit einer Temperatur von ca. 150° C unter einem Druck von 2 Bar durch den innenzylindrischen Hohlraum 122 und die Durchtrittsöffnungen in den Wänden der Form 120 hindurch in den Raum zugeführt, der die teilweise expandierten Schaumstoff-Partikel enthält. Dabei ist dem Wasserdampf vorzugsweise ein Gas (z. B. Pentan-Gas) zugesetzt, so dass die Schaumstoff-Partikel weiter expandiert werden, während sie dem heißen Wasserdampf ausgesetzt sind. Daher verschmelzen die Oberflächen aneinander angrenzender Partikel unter dem Druck der weiteren Expansion. Die Folge ist eine zuverlässige und schnell bewirkte Verbindung der Schaumstoff-Partikel mit den benachbarten Partikeln. Dieser Prozess der weiteren Expansion ist für die Erfindung jedoch nicht zwingend erforderlich. Es können auch bereits vollständig expandierte Partikel verwendet werden, die lediglich noch miteinander verbunden werden, wenn sie sich in der Form befinden.

Anschließend, insbesondere nachdem der Stützkörper und die Form abgekühlt wurden, wird die Form z. B. wieder geteilt und kann so der fertig gestellte Stützkörper aus der Form entnommen werden.

Ein Festbacken der Schaumstoff-Partikel an der Oberfläche der Form wird z. B. verhindert, indem das Material der Form geeignet gewählt wird (z. B. Aluminium). Alternativ oder zusätzlich kann die Form vor dem Einfüllen der Schaumstoff-Partikel mit einem silikonfreien Antihaftmittel versehen werden.

## Patentansprüche

1. Stützkörper (1) zum schwingungsdämpfenden Abstützen von Lasten (91), insbesondere zum Abstützen eines Koordinatenmessgeräts, wobei der Stützkörper (1)
- ein Formteil (3) aus expandierten Schaumstoff-Partikeln (123), die miteinander verbunden sind, und
- zumindest ein in das Formteil (3) integriertes Stabilisierungsmodul (5) aufweist,
**dadurch gekennzeichnet, dass** das Stabilisierungsmodul (5) zumindest einen aus dem Formteil (3) herausragenden Verbindungsbereich (12) hat, an dem das Stabilisierungsmodul (5) mit einem weiteren stabilisierenden Gegenstand (71) verbindbar ist.

2. Stützkörper nach Anspruch 1, wobei das Stabilisierungsmodul (5) über den Verbindungsbereich (12) mit einem weiteren Exemplar des Stützkörpers (1) verbunden ist.

3. Stützkörper nach einem der vorhergehenden Ansprüche, wobei das Stabilisierungsmodul (5) aus Metall gefertigt ist.

4. Stützkörper nach einem der vorhergehenden Ansprüche, wobei das Stabilisierungsmodul (5) einen Hohlraum mit Öffnungen an mehreren Seiten aufweist und wobei der Hohlraum zumindest teilweise mit Schaumstoff-Partikeln (123) ausgefüllt ist.

5. Stützkörper nach einem der vorhergehenden Ansprüche, wobei zumindest ein Teil der Schaumstoff-Partikel (123) Polyolefin-Partikel sind, die insbesondere aus Homopolymeren und/oder Copolymeren von Ethylen und/oder Propylen gefertigt sind.

6. Stützkörper nach einem der vorhergehenden Ansprüche, wobei das Formteil (3) sowohl eine obere Oberfläche (3e) zum Einleiten von Kräften der Last (91) als auch eine untere Oberfläche (3f) zum Ableiten der Kräfte der Last (91) nach unten aufweist.

7. Stützkörper nach dem vorhergehenden Anspruch, wobei das Formteil (3) an der oberen Oberfläche (3e) und/oder an der unteren Oberfläche (3f) eine Mehrzahl von hervorstehenden Bereichen (21) aufweist.

8. Stützkörper nach dem vorhergehenden Anspruch, wobei zwischen die hervorstehenden Bereiche (21) ein Material (100, 110) eingebracht ist, über das Kräfte der Last (91) in das Formteil (3) einleitbar sind.

9. Stützkörper nach einem der vorhergehenden Ansprüche, wobei eine nach oben offene Ausnehmung (9) aufweist, in die ein nach oben aus der Ausnehmung (9) herausragendes Element (61) eingebracht ist.

10. Stützkörper nach einem der vorhergehenden Ansprüche, wobei das Formteil (3) in einem zentralen Bereich einen Hohlraum (9) aufweist, der zumindest an einer Seite offen ist.

11. Stützkörper-Anordnung mit einer Mehrzahl der Stützkörper (1) nach einem der vorhergehenden Ansprüche, wobei zumindest zwei der Stabilisierungsmodule (5) verschiedener Stützkörper (1a bis 1d) paarweise durch zumindest einen Verbindungsgegenstand (71a bis 71d) miteinander verbunden sind.

12. Stützkörper-Anordnung nach dem vorhergehenden Anspruch, wobei der Verbindungsgegenstand (71) aus Metallblech und/oder Metallrohr gefertigt ist.

13. Verfahren zum Herstellen eines Stützkörpers (1) zum schwingungsdämpfenden Abstützen von Lasten, insbesondere des Stützkörper nach einem der Ansprüche 1 bis 10, wobei
- eine Vielzahl von Schaumstoff-Partikeln (123) und zumindest ein Stabilisierungsmodul (5) in eine Form (120) eingebracht werden und
- aus den Schaumstoff-Partikeln (123) ein Formteil gebildet wird, indem die Schaumstoff-Partikel (123) miteinander verbunden werden,
**dadurch gekennzeichnet, dass** das Stabilisierungsmodul (5) zumindest einen aus dem Formteil (3) herausragenden Verbindungsbereich (12) hat, an dem das Stabilisierungsmodul (5) mit einem weiteren stabilisierenden Gegenstand (71) verbindbar wird, und
dass auf Oberflächen der Schaumstoff-Partikel ein Klebstoff aufgebracht wird und dass der Klebstoff durch Zuführen eines den Klebstoff aktivierenden Gases aktiviert wird.

14. Verfahren nach Anspruch 13, wobei in einem zentralen Bereich eines durch die Form (120) gebildeten Hohlraumes zur Aufnahme der Schaumstoff-Partikel (123) ein Hohlkörper angeordnet ist, wobei die Schaumstoff-Partikel (123) in den Hohlraum, aber nicht in das Innere des Hohlkörpers eingebracht werden und wobei ein Gas durch das Innere des Hohlkörpers und anschließend durch Öffnungen in einer Wand des Hohlkörpers hindurch zu den Schaumstoff-Partikeln (123) geführt wird, um die Schaumstoff-Partikel (123) miteinander zu verschweißen.

15. Verfahren nach Anspruch 13 oder 14, wobei zumindest ein Teil der Schaumstoff-Partikel (123) Polyolefin-Partikel sind, die insbesondere aus Homopolymeren und/oder Copolymeren von Ethylen und/oder Propylen gefertigt sind.

## Claims

1. Supporting body (1) for the vibration-damping support of loads (91), in particular for the support of a coordinate-measuring machine, wherein the supporting body (1) has
- a moulding (3) made of expanded foam particles (123) which are connected to one another, and
- at least one stabilizing module (5), which is integrated in the moulding (3),
**characterized in that** the stabilizing module (5) has at least one connecting region (12) which projects out of the moulding (3) and on which the stabilizing module (5) can be connected to a further stabilizing object (71).

2. Supporting body according to Claim 1, wherein the stabilizing module (5) is connected to a further example of the supporting body (1) via the connecting region (12).

3. Supporting body according to either of the preceding claims, wherein the stabilizing module (5) is manufactured from metal.

4. Supporting body according to one of the preceding claims, wherein the stabilizing module (5) has a cavity with openings on a plurality of sides, and wherein the cavity is filled, at least to some extent, with foam particles (123).

5. Supporting body according to one of the preceding claims, wherein at least some of the foam particles (123) are polyolefin particles which are manufactured in particular from homopolymers and/or copolymers of ethylene and/or propylene.

6. Supporting body according to one of the preceding claims, wherein the moulding (3) has both an upper surface (3e) for the introduction of forces from the load (91) and a lower surface (3f) for the dissipation of the forces from the load (91) in the downward direction.

7. Supporting body according to the preceding claim, wherein the moulding (3) has a plurality of projecting regions (21) on the upper surface (3e) and/or on the lower surface (3f).

8. Supporting body according to the preceding claim, wherein a material (100, 110) via which forces from the load (91) can be introduced into the moulding (3) is fitted in between the projecting regions (21).

9. Supporting body according to one of the preceding claims, wherein has an upwardly open aperture (9), into which is fitted an element (61) which projects upwards out of the aperture (9).

10. Supporting body according to one of the preceding claims, wherein, in a central region, the moulding (3) has a cavity (9) which is open at least on one side.

11. Supporting-body arrangement having a plurality of the supporting bodies (1) according to one of the preceding claims, wherein at least two of the stabilizing modules (5) of different supporting bodies (1a to 1d) are connected to one another in pairs by at least one connecting object (71a to 71d).

12. Supporting-body arrangement according to the preceding claim, wherein the connecting object (71) is manufactured from a metal plate and/or a metal tube.

13. Method for producing a supporting body (1) for the vibration-damping support of loads, in particular the supporting body according to one of Claims 1 to 10, wherein
- a multiplicity of foam particles (123) and at least one stabilizing module (5) are fitted into a mould (120) and
- the foam particles (123) form a moulding by virtue of the foam particles (123) being connected to one another,
**characterized in that** the stabilizing module (5) has at least one connecting region (12) which projects out of the moulding (3) and on which the stabilizing module (5) can be connected to a further stabilizing object (71), and **in that** an adhesive is applied to surfaces of the foam particles, and **in that** the adhesive is activated by the supply of an adhesive-activating gas.

14. Method according to Claim 13, wherein a hollow body is arranged in a central region of a cavity which is formed by the mould (120) and is intended for accommodating the foam particles (123), wherein the foam particles (123) are fitted into the cavity, but not into the interior of the hollow body, and wherein a gas is channelled to the foam particles (123) through the interior of the hollow body, and then through openings in a wall of the hollow body, in order to weld the foam particles (123) to one another.

15. Method according to Claim 13 or 14, wherein at least some of the foam particles (123) are polyolefin particles which are manufactured in particular from homopolymers and/or copolymers of ethylene and/or propylene.

## Revendications

1. Corps de support (1) servant à supporter, en amortissant les vibrations, des charges (91), en particulier servant à supporter un appareil de mesure de coordonnées, le corps de support (1) comportant
- une pièce moulée (3) constituée de particules de mousse expansées (123), qui sont reliées les unes aux autres et
- au moins un module de stabilisation (5) intégré dans la pièce moulée (3),
**caractérisé en ce que** le module de stabilisation (5) comporte au moins une zone de liaison (12) faisant saillie hors de la pièce moulée (3), au niveau de laquelle le module de stabilisation(5) peut être relié à un autre objet stabilisant (71).

2. Corps de support selon la revendication 1, dans lequel le module de stabilisation (5) est relié à un autre exemplaire du corps de support (1) par le biais de la zone de liaison (12).

3. Corps de support selon l'une quelconque des revendications précédentes, dans lequel le module de stabilisation (5) est fabriqué en métal.

4. Corps de support selon l'une quelconque des revendications précédentes, dans lequel le module de stabilisation (5) comprend une cavité dotée d'ouvertures sur plusieurs côtés, et dans lequel la cavité est remplie au moins partiellement avec des particules de mousse (123) .

5. Corps de support selon l'une quelconque des revendications précédentes, dans lequel au moins une partie des particules de mousse (123) sont des particules de polyoléfine qui sont fabriquées notamment à partir d'homopolymères et/ou de copolymères d'éthylène et/ou de propylène.

6. Corps de support selon l'une quelconque des revendications précédentes, dans lequel la pièce moulée (3) comprend à la fois une surface supérieure (3e) pour introduire des forces de la charge (91) et une surface inférieure (3f) pour évacuer les forces de la charge (91) vers le bas.

7. Corps de support selon la revendication précédente, dans lequel la pièce moulée (3) comprend au niveau de la surface supérieure (3e) et/ou au niveau de la surface inférieure (3f) une pluralité de zones saillantes (21).

8. Corps de support selon la revendication précédente, dans lequel entre les zones saillantes (21) est introduit un matériau (100, 110) par le biais duquel des forces de la charge (91) peuvent être introduites dans la pièce moulée (3).

9. Corps de support selon l'une quelconque des revendications précédentes, dans lequel présente un évidement (9) ouvert vers le haut, évidement dans lequel est introduit un élément (61) faisant saillie vers le haut hors de l'évidement (9).

10. Corps de support selon l'une quelconque des revendications précédentes, dans lequel la pièce moulée (3) comprend, dans une zone centrale, une cavité (9) qui est ouverte au moins d'un côté.

11. Agencement de corps de support comprenant une pluralité de corps de support (1) selon l'une quelconque des revendications précédentes, au moins deux des modules de stabilisation (5) de différents corps de support (la à 1d) étant reliés les uns aux autres par paires par au moins un objet de liaison (71a à 71d).

12. Agencement de corps de support selon la revendication précédente, dans lequel l'objet de liaison (71) est fabriqué à partir d'une tôle métallique et/ou d'un tube métallique.

13. Procédé de fabrication d'un corps de support (1) servant à supporter, en amortissant les vibrations, des charges, en particulier du corps de support selon l'une des revendications 1 à 10, dans lequel
- une pluralité de particules de mousse (123) et au moins un module de stabilisation (5) sont introduits dans un moule (120) et
- une pièce moulée est formée à partir des particules de mousse (123), par le fait que les particules de mousse (123) sont reliées les unes aux autres,
**caractérisé en ce que** le module de stabilisation (5) comporte au moins une zone de liaison (12) faisant saillie hors de la pièce moulée (3), zone de liaison au niveau de laquelle le module de stabilisation (5) peut être relié à un autre objet stabilisant (71) et
**en ce qu'**un adhésif est appliqué sur des surfaces des particules de mousse, et **en ce que** l'adhésif est activé par l'apport d'un gaz activant l'adhésif.

14. Procédé selon la revendication 13, dans lequel, dans une zone centrale d'une cavité formée par le moule (120), destinée à recevoir les particules de mousse(123), est disposé un corps creux, dans lequel les particules de mousse (123) sont introduites dans la cavité, mais pas à l'intérieur du corps creux, et dans lequel un gaz est conduit à travers l'intérieur du corps creux puis à travers des ouvertures dans une paroi du corps creux jusqu'aux particules de mousse (123) pour souder ensemble les particules de mousse (123).

15. Procédé selon la revendication 13 ou 14, dans lequel au moins une partie des particules de mousse (123) sont des particules de polyoléfines qui sont fabriquées notamment à partir d'homopolymères et/ou de copolymères d'éthylène et/ou de propylène.
